# EUROPÄISCHE PATENTANMELDUNG

(11) **EP 3 474 198 A1**
(43) Veröffentlichungstag der Anmeldung: **24.04.2019**
(21) Anmeldenummer: 17197149.2
(22) Anmeldetag: 18.10.2017
(51) Int. Cl.: G06Q 10/06, G06Q 10/08

(54) **VORRICHTUNG UND VERFAHREN ZUR ANSTEUERUNG UND VERWALTUNG EINER INDUSTRIEANLAGE**

(71) Anmelder: IBN Systems GmbH, 86825 Bad Wörishofen (DE)
(72) Erfinder: MIKULINA, Igor, 86825 Bad Wörishofen (DE); KERNSCHMIDT, Konstantin Emanuel Thassilo, 86825 Bad Wörishofen (DE)
(74) Vertreter: TBK

(57) **Zusammenfassung**

Maßnahmen bzw. Mittel zur Realisierung einer Ansteuerung und Verwaltung einer Industrieanlage werden bereitgestellt. Solche Maßnahmen bzw. Mittel umfassen beispielhaft ein Speichern von Industrieanlagenstrukturinformationen bezüglich einer Anordnung der Vielzahl von Industrieanlagenkomponenten, wobei jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, ein Speichern des Fähigkeitsverzeichnisses entsprechend jeder der Vielzahl von Industrieanlagenkomponenten, ein Empfangen von Daten bezüglich jeder der Vielzahl von Industrieanlagenkomponenten, ein Speichern von empfangenen Daten, und ein Zusammenführen der empfangenen Daten basierend auf den Industrieanlagenstrukturinformationen.

## Beschreibung

### Technisches Gebiet

Die vorliegende Erfindung bezieht sich auf Ansteuerung und Verwaltung einer Industrieanlage. Insbesondere bezieht sich die vorliegende Erfindung auf Maßnahmen (einschließlich Verfahren, Vorrichtungen, und Computerprogrammprodukten) zur Realisierung einer Ansteuerung und Verwaltung einer Industrieanlage. Beispielhaft bezieht sich die vorliegende Erfindung auf eine Vorrichtung und ein Verfahren zur Ansteuerung und Verwaltung einer Industrieanlage in einer Industrie-4.0-Umgebung.

### Hintergrund

Immer mehr mittelständische Unternehmen erkennen die Chancen und Vorteile von Industrie 4.0, um ihre langfristige Wettbewerbsfähigkeit zu sichern. Bisher angebotene Industrie-4.0-Lösungen erfüllen dabei häufig jedoch nicht die spezifischen Anforderungen für den Mittelstand. Dies gilt sowohl für mittelständische Hersteller von Anlagen, Vorrichtungen und Komponenten, die "Industrie-4.0-fähige" Produkte entwickeln wollen, als auch für Betreiber mittelständischer verarbeitender Betriebe, die ihr Unternehmen digitalisieren möchten.

Eine Zusammenfassung einiger dieser Anforderungen wird nachfolgend gegeben.

Eine Anforderung betrifft die herstellerübergreifende Integration verschiedener Systeme. Insbesondere in mittelständischen Betrieben werden üblicherweise Anlagen, Vorrichtungen und Komponenten von unterschiedlichen, spezialisierten Herstellern eingesetzt. Um die Mehrwerte einer Digitalisierung, wie z.B. intelligentes Energiemanagement oder Predictive Maintenance, systemübergreifend zu nutzen, ist es notwendig, dass nicht nur jedes einzelne System "Industrie-4.0-fähig" ist, sondern dass die verschiedenen Systeme interoperabel sind und der Betreiber eine transparente Übersicht über alle Systeme seines Unternehmens erhält. Monopolistische Industrie-4.0-Lösungen einzelner Unternehmen sind daher für eine unternehmensweite Kopplung unterschiedlichster Systeme nicht geeignet.

Eine weitere Anforderung betrifft die Einhaltung von Vorschriften und Standards im Maschinen- und Anlagenbau. Hersteller im Maschinen- und Anlagenbau sind verpflichtet, die für ihre Systeme geltenden Vorschriften (z.B. CE-Konformität, Maschinenrichtlinien) einzuhalten und können bei Verstößen entsprechend haftbar gemacht werden. Sowohl für die Hersteller als auch für die Betreiber ist es daher von essentieller Bedeutung, dass klar definiert ist, welche Aktionen (z.B. Ausschalten einer Komponente, um Energie zu sparen) durch welches System ausgeführt werden darf. Eine direkte, unkontrollierte Vernetzung und Ansteuerung auf unterster Komponentenebene ist daher zur Gewährleistung von Safety- und Security-Anforderungen und aus der Haftungsperspektive heraus nicht realisierbar.

Eine weitere Anforderung betrifft die lokale Konfiguration einer aus dem Industrie-4.0-Kontext bekannten Smart Factory nach spezifischen Gegebenheiten. Die Konfiguration einer (digitalen) Produktion ist immer abhängig von spezifischen Randbedingungen (z.B. landesspezifische Gesetze für Grenzwerte, Klima, Größe der Produktionshalle, etc.). Durch Modernisierung oder Wachstum kommt es zudem häufig vor, dass sich die ursprüngliche Konfiguration im Laufe der Zeit ändert. Der Betreiber muss daher in der Lage sein, die Beziehungen zwischen den verschiedenen Industrie-4.0-Produkten zu definieren. Zudem sollte der Betreiber selbst entscheiden können, welche Drittanbieterapplikationen und Dienste (beispielsweise Cloud-Dienste) er in Anspruch nehmen möchte, bzw. welche Daten er den jeweiligen Herstellern (z.B. zu Wartungszwecken) zur Verfügung stellen möchte. Eine direkte Vernetzung der verschiedenen Systeme mit den Clouds der jeweiligen Hersteller kann eine solche Konfiguration nicht ermöglichen. Zudem ist so für den Betreiber häufig nicht ersichtlich, welche Daten übertragen werden (was wiederum Auswirkungen auf die vorgenannte Haftung Einfluss haben kann).

Weitere Anforderungen werden an die Interoperabilität gestellt. Insbesondere aus Vorgenanntem ist ersichtlich, dass ein reibungsloser und damit weitestgehend automatisierter Fluss von Informationen vorausgesetzt wird. Aufbauend auf der Integrierbarkeit beschreibt Interoperabilität die Fähigkeit der Komponenten, basierend auf einem gemeinsamen konzeptionellen Modell Informationen und digitale Services miteinander auszutauschen sowie die Interpretation der Information im Kontext zu ermöglichen. Dies beinhaltet den automatischen oder automatisierten Informationsaustausch. Die Interoperabilität ist also keine Maßnahme, sondern eine Eigenschaft oder ein Zustand, also eine Fähigkeit.

Interoperabilität bedeutet im Kontext Industrie 4.0 ausdrücklich auch, branchenübergreifend kommunizieren und interoperieren zu können. Diese notwendige Interoperabilität ist heute nicht gegeben. In mangelnder Interoperabilität der jeweils beteiligten Einzelkomponenten kann dabei eine der Barrieren für die Funktionsfähigkeit komplexer Informations- und Kommunikationstechnik-Systeme (IKT-Systeme) gesehen werden. Die Entwicklung von Kriterien zur Nutzung und zum Austausch von Daten unter mehreren Marktakteuren ist darum im Fokus von branchenübergreifenden Initiativen und der Forschungsförderung.

Ungeachtet dessen werden in mangelnder Interoperabilität auch vereinzelt Vorteile gesehen. Begünstigt durch dieses Defizit werden i.d.R. diejenigen Anbieter, deren Systeme den Markt bestimmen, da es mangelnde Interoperabilität ermöglicht, andere Anbieter auszuschließen.

Interoperabilität ist daher ein wichtiger Mechanismus, bestehende wirtschaftlich-technische Abhängigkeiten abzubauen.

Interoperabilität im Sinne der funktionalen Kompatibilität beinhaltet unter anderem die Gerätemerkmale Kommunikationsprotokoll, Kommunikationsinterface, Datenzugriff, Datentypen, Parametersemantik und Anwendungsfunktionalität. Interoperabilität bezeichnet somit die Fähigkeit eines Systems oder eines Produkts, mit anderen Systemen oder Produkten ohne spezifischen Aufwand seitens des Kunden zusammenzuarbeiten.

### Zusammenfassung

Verschiedene beispielhafte Ausführungsbeispiele der vorliegenden Erfindung zielen auf ein Angehen von zumindest Teilen der vorstehend genannten Belange und/oder Probleme und Nachteile. Insbesondere erfüllen verschiedene beispielhafte Ausführungsbeispiele der vorliegenden Erfindung zumindest Teile der vorstehend ausgeführten Anforderungen.

Verschiedene Aspekte beispielhafter Ausführungsbeispiele der vorliegenden Erfindung sind in den angehängten Ansprüchen dargelegt.

Gemäß einem ersten Aspekt der vorliegenden Erfindung wird eine Vorrichtung zur Ansteuerung und Verwaltung einer Industrieanlage mit einer Vielzahl von Industrieanlagenkomponenten bereitgestellt, mit
einer Steuereinrichtung, und
einem Speicher, der dazu eingerichtet ist, um Industrieanlagenstrukturinformationen bezüglich einer Anordnung der Vielzahl von Industrieanlagenkomponenten zu speichern, wobei
jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und
der Speicher ferner dazu eingerichtet ist, um das Fähigkeitsverzeichnis entsprechend jeder der Vielzahl von Industrieanlagenkomponenten zu speichern, und wobei die Vorrichtung ferner umfasst
eine Empfangseinrichtung, die dazu eingerichtet ist, um Daten bezüglich jeder der Vielzahl von Industrieanlagenkomponenten zu empfangen, wobei
der Speicher ferner dazu eingerichtet ist, um empfangene Daten zu speichern, und
die Steuereinrichtung dazu eingerichtet ist, um die empfangenen Daten basierend auf den Industrieanlagenstrukturinformationen zusammenzuführen.

Gemäß einem zweiten Aspekt der vorliegenden Erfindung wird ein Verfahren zur Ansteuerung und Verwaltung einer Industrieanlage mit einer Vielzahl von Industrieanlagenkomponenten bereitgestellt, mit
einem Speichern von Industrieanlagenstrukturinformationen bezüglich einer Anordnung der Vielzahl von Industrieanlagenkomponenten, wobei
jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und wobei das Verfahren ferner umfasst
ein Speichern des Fähigkeitsverzeichnisses entsprechend jeder der Vielzahl von Industrieanlagenkomponenten,
ein Empfangen von Daten bezüglich jeder der Vielzahl von Industrieanlagenkomponenten,
ein Speichern von empfangenen Daten, und
ein Zusammenführen der empfangenen Daten basierend auf den Industrieanlagenstrukturinformationen.

Gemäß einem dritten Aspekt der vorliegenden Erfindung wird eine Vorrichtung zur Ansteuerung und Verwaltung einer Industrieanlagenkomponente bereitgestellt, mit
zumindest einem Prozessor,
zumindest einem Speicher einschließlich einem Computerprogramm-Code,
zumindest einer Schnittstelle, die zur Kommunikation mit zumindest einer anderen Vorrichtung eingerichtet ist,
wobei der zumindest eine Prozessor mit dem zumindest einen Speicher und dem Computerprogramm-Code dazu eingerichtet ist, die Vorrichtung dazu zu bringen, die folgenden Schritte auszuführen:
ein Speichern von Industrieanlagenstrukturinformationen bezüglich einer Anordnung der Vielzahl von Industrieanlagenkomponenten, wobei
jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst,
ein Speichern des Fähigkeitsverzeichnisses entsprechend jeder der Vielzahl von Industrieanlagenkomponenten,
ein Empfangen von Daten bezüglich jeder der Vielzahl von Industrieanlagenkomponenten,
ein Speichern von empfangenen Daten, und
ein Zusammenführen der empfangenen Daten basierend auf den Industrieanlagenstrukturinformationen.

Gemäß einem vierten Aspekt der vorliegenden Erfindung wird ein Computerprogrammprodukt mit einem computerausführbaren Computerprogramm-Code bereitgestellt, der, wenn das Programm auf einem Computer (beispielsweise einem Computer einer Vorrichtung gemäß einem vorgenannten vorrichtungsbezogenen Aspekt der vorliegenden Erfindung) ausgeführt wird, dazu eingerichtet ist, um den Computer dazu zu bringen, das Verfahren gemäß einem vorgenannten verfahrensbezogenen Aspekt der vorliegenden Erfindung auszuführen.

Ein solches Computerprogrammprodukt kann ein computerlesbares Medium umfassen, auf dem der computerausführbare Computerprogramm-Code gespeichert ist. Das Programm kann direkt in einen internen Speicher des Computers oder einen Prozessor des Computers ladbar sein.

Jeder der vorgenannten Aspekte ermöglicht es, vorstehend diskutierten Anforderungen gerecht zu werden um dadurch zumindest einen Teil der in Bezug auf den Stand der Technik identifizierten Probleme und Nachteile zu lösen.

### Kurze Beschreibung der Zeichnungen

Figur 1 ist ein Blockdiagramm, das eine Vorrichtung gemäß beispielhafter Ausführungsbeispiele der vorliegenden Erfindung veranschaulicht,
Figur 2 ist ein Blockdiagramm, das eine Vorrichtung gemäß beispielhafter Ausführungsbeispiele der vorliegenden Erfindung veranschaulicht,
Figur 3 ist ein schematisches Diagramm einer Prozedur gemäß beispielhafter Ausführungsbeispiele der vorliegenden Erfindung,
Figur 4 (Figur 4(A) und 4(B)) ist ein schematisches Diagramm, das ein Fähigkeitsverzeichnis gemäß beispielhafter Ausführungsbeispiele der vorliegenden Erfindung veranschaulicht,
Figur 5 ist ein schematisches Diagramm, das Schnittstellen gemäß beispielhafter Ausführungsbeispiele der vorliegenden Erfindung veranschaulicht,
Figur 6 ist ein schematisches Diagramm, das Schnittstellen gemäß beispielhafter Ausführungsbeispiele der vorliegenden Erfindung veranschaulicht, und
Figur 7 ist ein Blockdiagramm, das eine alternative Veranschaulichung von Vorrichtungen gemäß beispielhafter Ausführungsbeispiele der vorliegenden Erfindung zeigt.

### Detaillierte Beschreibung von Zeichnungen und Ausführungsbeispielen der vorliegenden Erfindung

Die vorliegende Erfindung wird hiernach unter Bezugnahme auf bestimmte, nicht einschränkende Beispiele und auf gegenwärtig vorstellbare Ausführungsbeispiele der vorliegenden Erfindung beschrieben. Der Fachmann wird erkennen, dass die Erfindung in keiner Weise auf diese zur Veranschaulichung dienenden Beispiele beschränkt und breiter als diese Beispiele zu verstehen ist.

Insbesondere wird die vorliegende Erfindung im Kontext von Industrie 4.0 beschrieben. Zwar ist die Implementierung in einer solchen Umgebung eine bevorzugte Ausführungsform der vorliegenden Erfindung, die vorliegende Erfindung ist jedoch nicht darauf beschränkt. Insbesondere kann die Erfindung in jeder anderen Umgebung implementiert sein, solange dies mit den hierin beschriebenen Merkmalen vereinbar ist.

Hiernach werden verschiedene Ausführungsbeispiele und Implementierungen der vorliegenden Erfindung und deren Aspekte unter Verwendung verschiedener Varianten und/oder Alternativen beschrieben. Alle der beschriebenen Varianten und/oder Alternativen können allein oder in jeder vorstellbaren Kombination (einschließlich Kombinationen einzelner Merkmale der verschiedenen Varianten und/oder Alternativen) vorgesehen sein.

Allgemein werden gemäß beispielhafter Ausführungsbeispiele der vorliegenden Erfindung Vorrichtungen und Verfahren zur Ansteuerung und Verwaltung einer Industrieanlage bereitgestellt.

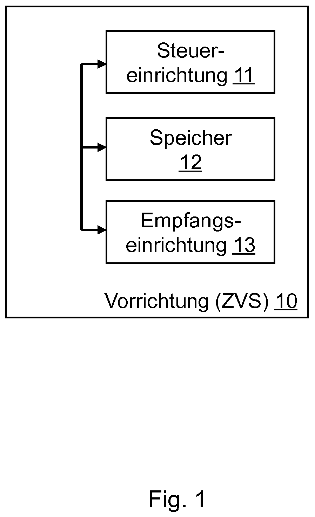

Figur 1 ist ein Blockdiagramm, das eine Vorrichtung gemäß beispielhafter Ausführungsbeispiele der vorliegenden Erfindung veranschaulicht. Die Vorrichtung 10 kann im Folgenden als eine Zentrale Verwaltungsschale (ZVS) bereitstellend bezeichnet werden. Dies beinhaltet beispielsweise Vorrichtungen, die eine solche Zentrale Verwaltungsschale und deren Funktionalitäten wie nachstehend beschrieben bereitstellen. Wenn im Folgenden eine Zentrale Verwaltungsschale genannt wird, dann bezieht sich dies immer auf die erfindungsgemäße Vorrichtung bzw. das erfindungsgemäße Verfahren, die die Zentrale Verwaltungsschale verkörpern bzw. deren Funktionalitäten bereitstellen.

Die Vorrichtung 10 kann eine Steuereinrichtung 11, einen Speicher 12, und eine Empfangseinrichtung 13 aufweisen. Der Speicher 12 speichert Industrieanlagenstrukturinformationen bezüglich einer Anordnung der Vielzahl von Industrieanlagenkomponenten. Jeder der Vielzahl von Industrieanlagenkomponenten ist ein Fähigkeitsverzeichnis zugeordnet, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst. Der Speicher 12 speichert ferner das Fähigkeitsverzeichnis entsprechend jeder der Vielzahl von Industrieanlagenkomponenten. Die Empfangseinrichtung 13 empfängt Daten bezüglich jeder der Vielzahl von Industrieanlagenkomponenten. Der Speicher 12 speichert empfangene Daten. Die Steuereinrichtung 11 führt die empfangenen Daten basierend auf den Industrieanlagenstrukturinformationen zusammen.

Das Fähigkeitsverzeichnis wird im Folgenden auch Methodenliste genannt und entspricht einer Aufstellung von Merkmalen und Fähigkeiten der zugeordneten Industrieanlagenkomponente.

Industrieanlagenkomponenten gemäß der vorliegenden Spezifikation werden auch als Assets bezeichnet und umfassen beispielsweise insbesondere Anlagengegenstände und Anlageneinzelteile, elektronischen Baugruppen, Teilsysteme und Systeme, Maschinen, Anlagen und Anlagenverbünde. Assets können jedoch beispielsweise auch auf Dienste, Konzepte und Ideen, Pläne, Archive, und Programme ausgeweitet werden.

Das Asset kann durch eine zwischen der Zentralen Verwaltungsschale und dem Asset (Industrieanlagenkomponente) angeordneten Entität repräsentiert sein.

Die an die erfindungsgemäße Zentrale Verwaltungsschale angeschlossenen (Verwaltungs-)Entitäten können sich entweder innerhalb einer Fabrik befinden oder an andern Standorten und in diesem Fall ihre Informationen über eine sichere Verbindung (z.B. VPN) mit der erfindungsgemäßen Zentrale Verwaltungsschale austauschen. Ein Austausch von Informationen zwischen verschiedenen erfindungsgemäßen Zentrale Verwaltungsschale in unterschiedlichen Fabriken/Standorten ist ebenfalls z.B. über eine entsprechende Applikation möglich. Auf Applikationen wird nachstehend näher eingegangen.

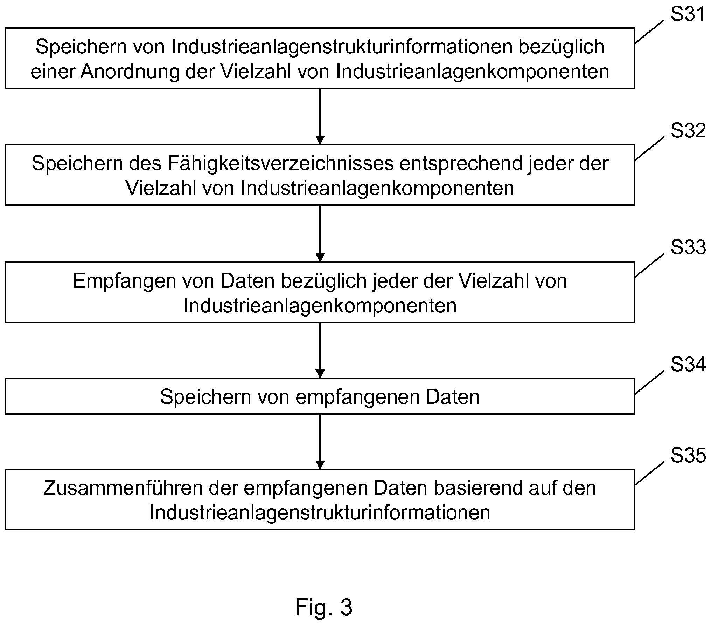

Figur 3 ist ein schematisches Diagramm eines Verfahrens gemäß beispielhafter Ausführungsbeispiele der vorliegenden Erfindung. Die Vorrichtung der Figur 1 kann das Verfahren der Figur 3 durchführen (kann dazu eingerichtet sein, um das Verfahren der Figur 3 durchzuführen), ist jedoch nicht auf dieses Verfahren beschränkt. Das Verfahren der Figur 3 kann durch die Vorrichtung der Figur 1 durchgeführt werden, ist jedoch nicht darauf beschränkt, durch diese Vorrichtung durchgeführt zu werden.

Wie in Figur 3 veranschaulicht umfasst ein Verfahren gemäß beispielhaften Ausführungsbeispielen der vorliegenden Erfindung einen Schritt eines Speicherns (S31) von Industrieanlagenstrukturinformationen bezüglich einer Anordnung der Vielzahl von Industrieanlagenkomponenten, wobei jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, einen Schritt eines Speicherns (S32) des Fähigkeitsverzeichnisses entsprechend jeder der Vielzahl von Industrieanlagenkomponenten, einen Schritt eines Empfangens (S33) von Daten bezüglich jeder der Vielzahl von Industrieanlagenkomponenten, einen Schritt eines Speicherns von empfangenen Daten, und einen Schritt eines Zusammenführens der empfangenen Daten basierend auf den Industrieanlagenstrukturinformationen.

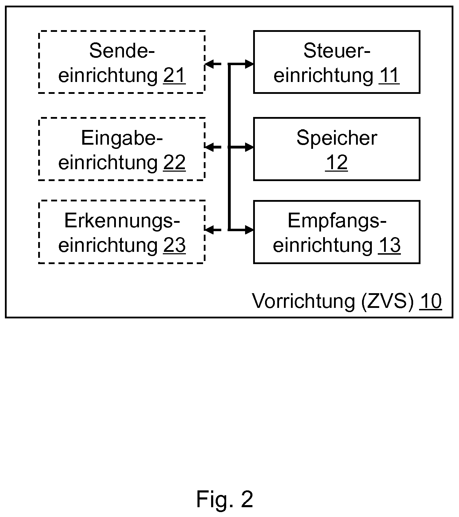

Figur 2 ist ein Blockdiagramm, das eine Vorrichtung gemäß beispielhafter Ausführungsbeispiele der vorliegenden Erfindung veranschaulicht. Insbesondere veranschaulicht Figur 2 eine Abwandlung der in Figur 1 veranschaulichten Vorrichtung. Die Vorrichtung gemäß Figur 2 kann daher ferner eine Sendeeinrichtung 21, eine Eingabeeinrichtung 22, und/oder eine Erkennungseinrichtung 23 aufweisen, wie nachstehend detaillierter beschrieben wird.

Insbesondere kann bei der Vorrichtung das Fähigkeitsverzeichnis zumindest einen hinterlegten statischen Komponentenparameter der jeweiligen Industrieanlagenkomponente, der für eine Eigenschaft der jeweiligen Industrieanlagenkomponente steht, und/oder eine Komponentenbetriebswertspezifizierung zumindest eines durch die Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder zumindest eine Synthesemethode zur auf zumindest einem durch das Fähigkeitsverzeichnis spezifizierten dynamischen Komponentenbetriebswert basierenden Generierung von Informationen für eine Ansteuerung und/oder Verwaltung der jeweiligen Industrieanlagenkomponente, und/oder zumindest eine Eingriffsmethode zum Eingriff in einen Betrieb der Industrieanlagenkomponente, und/oder Empfängerberechtigungsinformation bezüglich zumindest einem dynamischen Komponentenbetriebswert, zumindest einer Synthesemethode, zumindest einer generierten Information, und/oder zumindest einer Eingriffsmethode aufweisen. Dabei können die empfangenen Daten eines aus durch die Industrieanlagenkomponente zu erfassenden dynamischen Komponentenbetriebswerten und durch eine Synthesemethode generierten Informationen sein.

Statische Komponentenparameter sind beispielsweise Angaben zu einem Temperaturarbeitsbereich (beispielsweise untere und obere Grenze), Angaben zu vorgeschriebenen Wartungsintervallen, und Angaben zu Hersteller, Typ und Kategorie einer Industrieanlagenkomponente. Die statischen Komponentenparameter sind jedoch nicht auf die genannten Beispiele beschränkt

Dynamische Komponentenbetriebswerte, die für einen Zustand der Industrieanlagenkomponente stehen, sind beispielsweise eine Temperatur, eine Betriebsdauer, ein Zeitpunkt eines letzten Fehlers, und eine Drehzahl. Die dynamischen Komponentenbetriebswerte sind jedoch nicht auf die genannten Beispiele beschränkt, sondern beziehen sich allgemein insbesondere auf die Erfassung von Maschinendaten, also industrieanlagenkomponentenbezogene Ist-Daten und fertigungsbezogene Ist-Daten.

Eine Komponentenbetriebswertspezifizierung umfasst beispielsweise die Angabe des jeweiligen dynamischen Komponentenbetriebswerts, kann jedoch auch beispielsweise Erfassungsintervalle oder Bereitstellungsintervalle des jeweiligen dynamischen Komponentenbetriebswerts und vergleichbare Eigenschaften im Zusammenhang mit dynamischen Komponentenbetriebswerten umfassen.

Synthesemethoden zur Generierung von Informationen umfassen eine Verarbeitung, eine Analyse, eine Fusion, eine Interpretation und eine Synthetisierung von eingehenden Größen und sind beispielsweise eine Bestimmung, ob sich eine aktuelle Temperatur eines Assets im Arbeitsbereich des Assets (Industrieanlagenkomponente) befindet, basierend auf einer (gemessenen) aktuellen Temperatur der Industrieanlagenkomponente und einem vorgegebenen Temperaturarbeitsbereich mit dem Ergebnis, dass sich die Temperatur im Normalbereich oder in einem Anormalbereich befindet, eine Bestimmung einer Effizienz einer Industrieanlagenkomponente basierend auf einer Betriebsdauer und einer geplanten Ausgabemenge (Produktionsmenge) und einer Ist-Ausgabemenge (Ist-Produktionsmenge), eine Bestimmung einer mittleren Betriebsdauer zwischen Ausfällen basierend auf einer Betriebsdauer und einer Außerbetriebszeit und einem Zeitpunkt eines letzten Fehlers, und eine Bestimmung eines Fälligkeitszeitpunktes einer nächsten Wartung basierend auf verstrichenen Betriebsstunden des Assets und einer geplanten zukünftigen Auslastung und Vorgaben zu Wartungsintervallen. Die Synthesemethoden und die dadurch generierten Informationen sind jedoch nicht auf die oben dargestellten Beispiele beschränkt.

Ferner kann bei der Vorrichtung die Empfangseinrichtung ferner dazu eingerichtet sein, um einen Abruf eines dynamischen Komponentenbetriebswerts, einen Abruf einer durch eine Synthesemethode zu generierenden Information, und/oder einen Abruf einer Eingriffsmethode bezüglich einer Abfrageindustrieanlagenkomponente zu empfangen, wobei der Abruf das Identifizierungszeichen der Abfrageindustrieanlagenkomponente umfasst, und kann die Steuereinrichtung ferner dazu eingerichtet sein, um basierend auf dem Identifizierungszeichen der Abfrageindustrieanlagenkomponente und dem Fähigkeitsverzeichnis der Abfrageindustrieanlagenkomponente zu bestimmen, ob der Abruf für die Abfrageindustrieanlagenkomponente erlaubt ist.

Zudem kann die Vorrichtung ferner eine Sendeeinrichtung 21 umfassen, und kann die Steuereinrichtung ferner dazu eingerichtet sein, um, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, zu prüfen, ob der dynamische Komponentenbetriebswert als Daten bezüglich der Abfrageindustrieanlagenkomponente empfangen und gespeichert ist. Dabei kann die Sendeeinrichtung dazu eingerichtet sein, um, wenn der dynamische Komponentenbetriebswert als Daten bezüglich der Abfrageindustrieanlagenkomponente empfangen und gespeichert ist, den dynamischen Komponentenbetriebswert an die Quelle des Abrufs zu senden. Dabei kann die Steuereinrichtung ferner dazu eingerichtet sein, um, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, zu prüfen, ob die durch die Synthesemethode zu generierenden Information als Daten bezüglich der Abfrageindustrieanlagenkomponente empfangen und gespeichert ist. Dabei kann die Sendeeinrichtung ferner dazu eingerichtet sein, um, wenn die durch die Synthesemethode zu generierenden Information als Daten bezüglich der Abfrageindustrieanlagenkomponente empfangen und gespeichert ist, die durch die Synthesemethode zu generierenden Information an die Quelle des Abrufs zu senden.

Zudem kann bei der Vorrichtung die Komponentenbetriebswertspezifizierung ferner einen Aktualisierungszyklus des dynamischen Komponentenbetriebswerts umfassen. Dabei kann die Steuereinrichtung ferner dazu eingerichtet sein, um basierend auf dem Aktualisierungszyklus zu prüfen, ob der als Daten bezüglich der Abfrageindustrieanlagenkomponente empfangene und gespeicherte dynamische Komponentenbetriebswert gültig ist, und um den dynamischen Komponentenbetriebswert nur dann an die Quelle des Abrufs zu senden, wenn der als Daten bezüglich der Abfrageindustrieanlagenkomponente empfangene dynamische Komponentenbetriebswert gültig ist.

Zudem kann bei der Vorrichtung die Sendeeinrichtung ferner dazu eingerichtet sein, um, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, den Abruf an die Abfrageindustrieanlagenkomponente weiterzuleiten. Dabei kann die Empfangseinrichtung ferner dazu eingerichtet sein, um eine Antwort der Abfrageindustrieanlagenkomponente zu empfangen. Dabei kann die Sendeeinrichtung ferner dazu eingerichtet sein, um die Antwort der Abfrageindustrieanlagenkomponente an die Quelle des Abrufs weiterzuleiten.

Zudem kann bei der Vorrichtung die Sendeeinrichtung ferner dazu eingerichtet sein, um, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, den Abruf an die Abfrageindustrieanlagenkomponente weiterzuleiten. Dabei kann die Empfangseinrichtung ferner dazu eingerichtet sein, um eine Antwort der Abfrageindustrieanlagenkomponente zu empfangen. Dabei kann die Sendeeinrichtung ferner dazu eingerichtet sein, um die Antwort der Abfrageindustrieanlagenkomponente an die Quelle des Abrufs weiterzuleiten.

Zudem kann bei der Vorrichtung die Sendeeinrichtung ferner dazu eingerichtet sein, um, wenn bei Abruf einer Eingriffsmethode bestimmt ist, dass der Abruf für die Abfrageindustrieanlagenkomponente erlaubt ist und wenn die Empfängerberechtigungsinformation bezüglich der Eingriffsmethode darauf hinweist, dass eine Quelle des Abrufs dazu berechtigt ist, den Abruf an die Abfrageindustrieanlagenkomponente weiterzuleiten.

Zudem kann die Vorrichtung ferner eine Eingabeeinrichtung 22 umfassen, die dazu eingerichtet ist, um eine Datenweitergabezustimmungseingabe für ein bestimmtes Industrieanlagenelement bezüglich zumindest einem dynamischen Komponentenbetriebswert und/oder zumindest eine durch eine Synthesemethode zu generierende Information zu empfangen. Dabei kann der Speicher dazu eingerichtet sein, um die Datenweitergabezustimmungseingabe zu speichern. Dabei kann ferner die Steuereinrichtung dazu eingerichtet sein, um die Datenweitergabezustimmungseingabe als Empfängerberechtigungsinformation zu berücksichtigen.

Zudem kann bei der Vorrichtung die Sendeeinrichtung ferner dazu eingerichtet sein, um eine vorbestimmte Antwort von der Vielzahl von Industrieanlagenkomponenten anzufordern. Dabei kann die Steuereinrichtung dazu eingerichtet sein, um bei Ausbleiben einer angeforderten Antwort einer der Vielzahl von Industrieanlagenkomponenten eine Anomalie der jeweiligen Industrieanlagenkomponente festzustellen.

Zudem kann bei der Vorrichtung die Sendeeinrichtung ferner dazu eingerichtet sein, um in vorbestimmten Abständen von der Vielzahl von Industrieanlagenkomponenten alle durch die jeweilige Industrieanlagenkomponente zu erfassenden dynamischen Komponentenbetriebswerte anzufordern. Dabei kann die Steuereinrichtung dazu eingerichtet sein, um bei Ausbleiben eines angeforderten zu erfassenden dynamischen Komponentenbetriebswerts einer der Vielzahl von Industrieanlagenkomponenten eine Anomalie der jeweiligen Industrieanlagenkomponente festzustellen.

Zudem kann die Vorrichtung ferner eine Erkennungseinrichtung 23 umfassen, die dazu eingerichtet ist, um ein Hinzufügen einer Industrieanlagenkomponente zu der Industrieanlage und das Identifizierungszeichen der hinzugefügten Industrieanlagenkomponente zu erkennen. Dabei kann die Sendeeinrichtung ferner dazu eingerichtet sein, um basierend auf dem Identifizierungszeichen der hinzugefügten Industrieanlagenkomponente einen Schlüssel bezüglich der hinzugefügten Industrieanlagenkomponente bei einem Server anzufordern. Dabei kann die Empfangseinrichtung ferner dazu eingerichtet sein, um den Schlüssel bezüglich der hinzugefügten Industrieanlagenkomponente zu empfangen. Der Schlüssel umfasst dabei das Fähigkeitsverzeichnis bezüglich der hinzugefügten Industrieanlagenkomponente, und das Identifizierungszeichen der hinzugefügten Industrieanlagenkomponente.

Zudem kann bei der Vorrichtung die Sendeeinrichtung und/oder die Empfangseinrichtung dazu eingerichtet sein, um mittels einem Open-Platform-Communications-Unified-Architecture-Protokoll (OPC UA) zu kommunizieren. OPC UA ist dabei ein industrielles Maschine-zu-Maschine-Protokoll.

Zudem kann bei der Vorrichtung die Industrieanlagenstrukturinformationen ferner auf funktionelle Abhängigkeiten zwischen der Vielzahl von Industrieanlagenkomponenten hinweisen.

In beispielhaften Ausführungsbeispielen können einige der Funktionalitäten der in Figur 1 und/oder 2 veranschaulichten Vorrichtung zwischen zwei (oder mehr) physikalisch getrennten Geräten aufgeteilt sein, die zusammen eine Betriebseinheit bilden.

Entsprechend der vorstehend angegebenen Struktur kann gemäß beispielhaften Ausführungsbeispielen der vorliegenden Erfindung das in Figur 3 veranschaulichte Verfahren wie folgt abgewandelt sein.

Bei dem Verfahren kann das Fähigkeitsverzeichnis zumindest einen hinterlegten statischen Komponentenparameter der jeweiligen Industrieanlagenkomponente, der für eine Eigenschaft der jeweiligen Industrieanlagenkomponente steht, und/oder eine Komponentenbetriebswertspezifizierung zumindest eines durch die Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder zumindest eine Synthesemethode zur auf zumindest einem durch das Fähigkeitsverzeichnis spezifizierten dynamischen Komponentenbetriebswert basierenden Generierung von Informationen für eine Ansteuerung und/oder Verwaltung der jeweiligen Industrieanlagenkomponente, und/oder zumindest eine Eingriffsmethode zum Eingriff in einen Betrieb der Industrieanlagenkomponente, und/oder Empfängerberechtigungsinformation bezüglich zumindest einem dynamischen Komponentenbetriebswert, zumindest einer Synthesemethode, zumindest einer generierten Information, und/oder zumindest einer Eingriffsmethode umfassen. Dabei können die empfangenen Daten eines aus durch die Industrieanlagenkomponente zu erfassenden dynamischen Komponentenbetriebswerten und durch eine Synthesemethode generierten Informationen sein.

Das Verfahren kann ferner ein Empfangen eines Abrufs eines dynamischen Komponentenbetriebswerts, eines Abrufs einer durch eine Synthesemethode zu generierenden Information, und/oder eines Abrufs einer Eingriffsmethode bezüglich einer Abfrageindustrieanlagenkomponente aufweisen, wobei der Abruf das Identifizierungszeichen der Abfrageindustrieanlagenkomponente umfasst, und ein Bestimmen, basierend auf dem Identifizierungszeichen der Abfrageindustrieanlagenkomponente und dem Fähigkeitsverzeichnis der Abfrageindustrieanlagenkomponente, ob der Abruf für die Abfrageindustrieanlagenkomponente erlaubt ist, aufweisen.

Das Verfahren kann ferner ein Prüfen, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, ob der dynamische Komponentenbetriebswert als Daten bezüglich der Abfrageindustrieanlagenkomponente empfangen und gespeichert ist, ein Senden, wenn der dynamische Komponentenbetriebswert als Daten bezüglich der Abfrageindustrieanlagenkomponente empfangen und gespeichert ist, des dynamischen Komponentenbetriebswerts an die Quelle des Abrufs, ein Prüfen, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, ob die durch die Synthesemethode zu generierenden Information als Daten bezüglich der Abfrageindustrieanlagenkomponente empfangen und gespeichert ist, und ein Senden, wenn die durch die Synthesemethode zu generierenden Information als Daten bezüglich der Abfrageindustrieanlagenkomponente empfangen und gespeichert ist, der durch die Synthesemethode zu generierenden Information an die Quelle des Abrufs, aufweisen.

Bei dem Verfahren kann die Komponentenbetriebswertspezifizierung ferner einen Aktualisierungszyklus des dynamischen Komponentenbetriebswerts umfassen. Dabei kann das Verfahren ferner ein Prüfen, basierend auf dem Aktualisierungszyklus, ob der als Daten bezüglich der Abfrageindustrieanlagenkomponente empfangene und gespeicherte dynamische Komponentenbetriebswert gültig ist, umfassen. Dabei kann der dynamische Komponentenbetriebswert nur dann an die Quelle des Abrufs gesendet werden, wenn der als Daten bezüglich der Abfrageindustrieanlagenkomponente empfangene dynamische Komponentenbetriebswert gültig ist.

Das Verfahren kann ferner ein Weiterleiten, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, des Abrufs an die Abfrageindustrieanlagenkomponente, ein Empfangen einer Antwort der Abfrageindustrieanlagenkomponente, und ein Weiterleiten der Antwort der Abfrageindustrieanlagenkomponente an die Quelle des Abrufs aufweisen.

Das Verfahren kann ferner ein Weiterleiten, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, des Abrufs an die Abfrageindustrieanlagenkomponente, ein Empfangen einer Antwort der Abfrageindustrieanlagenkomponente, und ein Weiterleiten der Antwort der Abfrageindustrieanlagenkomponente an die Quelle des Abrufs aufweisen.

Das Verfahren kann ferner ein Weiterleiten, wenn bei Abruf einer Eingriffsmethode bestimmt ist, dass der Abruf für die Abfrageindustrieanlagenkomponente erlaubt ist und wenn die Empfängerberechtigungsinformation bezüglich der Eingriffsmethode darauf hinweist, dass eine Quelle des Abrufs dazu berechtigt ist, des Abrufs an die Abfrageindustrieanlagenkomponente, aufweisen.

Das Verfahren kann ferner einen Empfang, mittels einer Eingabeeinrichtung, einer Datenweitergabezustimmungseingabe für ein bestimmtes Industrieanlagenelement bezüglich zumindest einem dynamischen Komponentenbetriebswert und/oder zumindest eine durch eine Synthesemethode zu generierende Information, ein Speichern der Datenweitergabezustimmungseingabe, und ein Berücksichtigen der Datenweitergabezustimmungseingabe als Empfängerberechtigungsinformation aufweisen.

Das Verfahren kann ferner ein Anfordern einer vorbestimmten Antwort von der Vielzahl von Industrieanlagenkomponenten, und ein Feststellen, bei Ausbleiben einer angeforderten Antwort einer der Vielzahl von Industrieanlagenkomponenten, einer Anomalie der jeweiligen Industrieanlagenkomponente, aufweisen.

Das Verfahren kann ferner ein Anfordern, in vorbestimmten Abständen, von der Vielzahl von Industrieanlagenkomponenten, aller durch die jeweilige Industrieanlagenkomponente zu erfassenden dynamischen Komponentenbetriebswerte, und ein Feststellen, bei Ausbleiben eines angeforderten zu erfassenden dynamischen Komponentenbetriebswerts einer der Vielzahl von Industrieanlagenkomponenten, einer Anomalie der jeweiligen Industrieanlagenkomponente, aufweisen.

Das Verfahren kann ferner ein Erkennen eines Hinzufügens einer Industrieanlagenkomponente zu der Industrieanlage und des Identifizierungszeichens der hinzugefügten Industrieanlagenkomponente, ein Anfordern, basierend auf dem Identifizierungszeichen der hinzugefügten Industrieanlagenkomponente, eines Schlüssels bezüglich der hinzugefügten Industrieanlagenkomponente bei einem Server, und ein Empfangen des Schlüssels bezüglich der hinzugefügten Industrieanlagenkomponente aufweisen. Dabei umfasst der Schlüssel das Fähigkeitsverzeichnis bezüglich der hinzugefügten Industrieanlagenkomponente und das Identifizierungszeichen der hinzugefügten Industrieanlagenkomponente.

Das Verfahren kann ferner ein Kommunizieren mittels eines Open-Platform-Communications-Unified-Architecture-Protokolls aufweisen.

Bei dem Verfahren kann die Industrieanlagenstrukturinformationen ferner auf funktionelle Abhängigkeiten zwischen der Vielzahl von Industrieanlagenkomponenten hinweisen.

Aspekte der vorliegenden Erfindung werden nachstehend detaillierter beschrieben.

Allgemein wird mit der vorliegenden Anmeldung ein umfassender Ansatz bzw. ein umfassendes Konzept verfolgt, eine Smart Factory in all ihren Aspekten abzubilden, um eine geeignete Einflussnahme zu ermöglichen.

Dabei soll die Digitalisierung und Vernetzung insbesondere kleinerer und mittlerer Unternehmen unterstützt werden, wobei auf bestehenden Standards und Leitfäden für Industrie 4.0 aufgebaut werden soll, und eine konkrete, robuste Umsetzung geboten werden soll, die konsequent auf den Anforderungen des Mittelstands ausgerichtet ist.

Um dazu sowohl schnell greifbare Mehrwerte, wie z.B. Datentransparenz in der Produktion, zu erreichen, als auch die Möglichkeit für (spätere) Erweiterungen durch Cloud-Services zu ermöglichen, verknüpft der erfindungsgemäße Ansatz die Kommunikation von Industrie-4.0-Produkten innerhalb des Unternehmens als auch die geprüfte und gesicherte Verbindung zu dem System zugeordneten übergeordneten Servern und/oder Drittanbieter-Clouds. Industrie-4.0-Produkte können dabei Anlagen (z.B. Plasmaschneidanlagen), Vorrichtungen (z.B. Handling- und Transportsysteme) oder eigenständige Komponenten (z.B. Pumpen) sein. Die Industrie-4.0-Produkte können eine Industrieanlage bilden oder Teil einer Industrieanlage sein.

Eine Industrieanlage kann dabei die Maschinen, Anlagen und Vorrichtungen in einer Produktion sowie alle umgebenden Komponenten bis hin zum Fabrikgebäude (Technische Gebäudeausrüstung, TGA) umfassen, welche sich in Verbindung, in Abhängigkeit oder im Einfluss mit der Produktion befinden. Dies betrifft ebenfalls Komponenten zum Management von internen und externen Arbeitskräften (z.B. Zugangsrechte, Authentifizierung, Wartungsbestätigungen). Auch nicht-physische Komponenten können dabei Teil der Industrieanlage sein.

Gemäß dem erfindungsgemäßen Konzept können im Zusammenhang mit der Industrieanlage mehrere Ebenen, beispielsweise vier Ebenen, definiert werden. In der vierteiligen Gliederung kann eine erste Ebene mit dem Systemkern verbundene Server und Clouds abbilden. Eine zweite Ebene kann die erfindungsgemäße Zentrale Verwaltungsschale abbilden. Eine dritte und vierte Ebene können der erfindungsgemäßen Zentralen Verwaltungsschale nachgeordnete Entitäten abbilden.

Eine Zentrale Verwaltungsschale (ZVS), die durch die erfindungsgemäße Vorrichtung und das erfindungsgemäße Verfahren zur Ansteuerung und Verwaltung einer Industrieanlage bereitgestellt wird, stellt das Kernstück einer sogenannten Smart Factory, welches die Interoperabilität der Industrie-4.0-Produkte gewährleistet, Applikationen und ggf. Cloud-Services anbindet und eine Visualisierung aller relevanten Informationen und Einstellungen für den Betreiber mittels Dashboard ermöglicht.

Die durch die erfindungsgemäße Vorrichtung und das erfindungsgemäße Verfahren zur Ansteuerung und Verwaltung einer Industrieanlage bereitgestellte Zentrale Verwaltungsschale bildet also eine zweite Ebene des erfindungsgemäßen Konzepts bzw. Ansatzes ab.

Diese Zentrale Verwaltungsschale repräsentiert übergeordnet eine im Industrie-4.0-Kontext bekannte Smart Factory und dient zudem als Gateway zu dem System zugeordneten Servern und externen Cloud-Servern. Die Zentrale Verwaltungsschale ist lokal beim Betreiber einer Smart Factory installiert bzw. vorgesehen, wodurch der Betreiber die gesamte Kontrolle über seine Daten (bzw. die durch die Smart Factory bzw. durch die Industrieanlage anfallenden Daten) behält.

Die Zentrale Verwaltungsschale, die durch die erfindungsgemäße Vorrichtung und das erfindungsgemäße Verfahren zur Ansteuerung und Verwaltung einer Industrieanlage bereitgestellt wird, ist eindeutig identifizierbar. Die Zentrale Verwaltungsschale ist dabei an die Hardware, auf der sie installiert bzw. durch die sie erfindungsgemäß verkörpert ist, auch über diese Identifizierbarkeit gekoppelt.

Die Zentrale Verwaltungsschale beinhaltet beispielsweise einen OPC-UA-Server und realisiert die Kommunikation sowohl zu einer übergeordneten Ebene wie auch zu untergeordneten Ebenen beispielsweise auf Basis von OPC-UA. Dabei kann die Übertragung beispielsweise über eine (gesicherte) Intranet/Internetverbindung, drahtlos, oder über standardisierte industrielle Netzwerkverbindungen erfolgen.

Die Zentrale Verwaltungsschale bietet neben oder im Rahmen der Ansteuerung und Verwaltung einer Industrieanlage zahlreiche grundlegende Funktionalitäten, die beispielsweise als Module ausgeführt sein können, um Systeme in der Smart Factory bzw. der Industrieanlage zu verwalten, zu koordinieren und zu überwachen.

Unter Anderem stellt die Zentrale Verwaltungsschale eine Schnittstelle zu Benutzern (z.B. Betreiber, Bediener) bereit. Die Schnittstelle kann Funktionalitäten der Zentralen Verwaltungsschale und/oder der Industrieanlage oder von Komponenten der Industrieanlage darstellen, und zudem eine Interaktion ermöglichen.

Gemäß bevorzugten Ausführungsbeispielen kann die erfindungsgemäße Zentrale Verwaltungsschale die Daten der Systeme anzeigen, diese jedoch nicht direkt ansteuern, sondern stattdessen Empfehlungen bzw. direkte Anweisungen abgeben. Die Empfehlungen bzw. direkten Anweisungen zur Ansteuerung können durch zusätzliche Applikationen (beispielsweise durch Hersteller entsprechender Industrieanlagenkomponenten bereitgestellt) erfolgen. Die tatsächliche Ansteuerung der Systeme erfolgt hingegen durch den jeweiligen Industrieanlagenkomponenten zugeordneten Steuerungen der Hersteller. Hierdurch ist gewährleistet, dass das erfindungsgemäße Konzept bzw. Umsetzende des erfindungsgemäßen Konzepts (z.B. Hersteller bzw. Bereitsteller der erfindungsgemäßen Vorrichtung oder des erfindungsgemäßen Verfahrens zur Ansteuerung und Verwaltung einer Industrieanlage) nicht für eine ggf. fehlerhafte Ansteuerung haftbar gemacht werden können, da nur die Verbindung zur Verfügung gestellt wird. Die Verantwortung der Ansteuerung kann hingegen Applikationsanbietern bzw. Herstellern zugesprochen werden.

Darüber hinaus stellt die erfindungsgemäße Zentrale Verwaltungsschale allgemein Funktionalitäten bereit, die sichere Identitäten gewährleisten (beispielsweise mittels Authentifizierung), die eine sichere Kommunikation gewährleisten (was insbesondere die Datensicherheit und -fehlerfreiheit beinhaltet), die einen sicheren Informationszugang gewährleisten (beispielsweise mittels Autorisierung), und die eine Datenaufzeichnung (Prüfung) sicherstellen.

Bei dem erfindungsgemäßen Konzept werden die Daten von verschiedenen Anlagen/Vorrichtungen/Komponenten konzentriert. Im Sinne von Industrie 4.0 und einer Smart Business World wird jedoch die Vernetzung verschiedener Datenbereiche angestrebt. Diese beinhalten unter anderem Maschinendaten (beispielsweise Anlagen/Vorrichtungen/Komponenten, aber auch Daten bezüglich Gebäudesteuerung), Personaldaten (z.B. Anlagenbediener, Bestätigung von Servicetechnikern, Bestätigung von Reinigungspersonal), und Werkstückdaten (z.B. via RFID-Tags).

Hierbei berücksichtigt das erfindungsgemäße Konzept, wie sich durch entsprechende Informationen am gezieltesten Mehrwerte erzielen lassen, statt alle möglichen Daten unkoordiniert aufzunehmen und z.B. an eine Cloud zu senden. Insbesondere werden dabei die folgenden Mehrwertfelder adressiert: Arbeits- und Ressourcenmanagement, Energieeffizienz, Maintenance, Qualitätssicherung, Arbeitssicherheit, und Supply Chain. Diese Mehrwertfelder sind jedoch nur beispielhaft genannt und schränken die Erfindung in keiner Weise ein. Insbesondere sind weitere Felder wie beispielsweise fertigungsbezogene Erkenntnisse umfasst, die sich auch noch durch zukünftige Entwicklungen ergeben können.

Detailliert betrifft vorliegende Erfindung ein System, welches die verschiedenen Assets (d.h., Industrieanlagenkomponenten) in der Smart Factory eindeutig identifiziert, mit diesen sicher kommuniziert, deren gesendete Informationen strukturiert und diese beispielsweise mit den Modulen der erfindungsgemäßen Zentralen Verwaltungsschale, welche grundlegende Funktionalitäten zur Steuerung und Überwachung einer Smart Factory (beispielsweise einer Industrieanlage) enthalten, sowie optional mit weiteren Applikationen und Cloud-Diensten austauscht.

Die durch die erfindungsgemäße Vorrichtung und das erfindungsgemäße Verfahren zur Ansteuerung und Verwaltung einer Industrieanlage bereitgestellte Zentrale Verwaltungsschale stellt eine übergeordnete Repräsentation einer Fabrik (Produktion), allgemein einer Industrieanlage, dar. Die Industrieanlage kann dabei eine Vielzahl von Industrieanlagenkomponenten umfassen.

Die Erfindungsgemäße Zentrale Verwaltungsschale stellt dabei insbesondere einen Datenbroker, eine Identifikationsmöglichkeit über einen dem System zugeordneten Server, Module, sowie Verknüpfungen zu (externen) Applikationen und Cloud-Diensten zur Verfügung.

Insbesondere übernimmt die erfindungsgemäße Zentrale Verwaltungsschale die Rolle eines Datenbrokers, indem von den Industrieanlagenkomponenten bzw. diesen zugeordneten Verwaltungsentitäten zufließenden Informationen aggregiert und diese Informationen in strukturierter Form weitergegeben werden. Durch den Datenbroker bzw. die Datenbrokerfunktionalität werden die Informationen somit empfangen (hierzu besitzt die erfindungsgemäße Zentrale Verwaltungsschale Abbilder von Methodenlisten (Fähigkeitsverzeichnissen) der angeschlossenen Industrieanlagenkomponenten bzw. diesen zugeordneten Verwaltungsentitäten, um definieren zu können welche Informationen ausgetauscht werden können), gespeichert (Log-Dateien) und verschiedene spezifische Informationen an die Module der erfindungsgemäßen Zentralen Verwaltungsschale und mit Zustimmung des Betreibers an Applikationen und ggf. Clouds weitergegeben.

Die eindeutige Identifikation der angeschlossenen Assets, die Verhinderung von Missbrauch und die Gewährleistung von Safety und Security sind zentrale Aspekte des erfindungsgemäßen Konzepts. Daher ist bei der Inbetriebnahme/Nachrüstung eines Systems bei einem Betreiber eine obligatorische Verbindung der erfindungsgemäßen Zentralen Verwaltungsschale mit einen dem System zugeordneten (übergeordneten) Server nötig, um die installierten Systeme eindeutig zu identifizieren, den bei der Implementierung generierten Schlüssel mit der Methodenliste (Fähigkeitsverzeichnis) zu überprüfen, herunterzuladen und als digitales Abbild in der erfindungsgemäßen Zentralen Verwaltungsschale zu hinterlegen.

Die erfindungsgemäße Zentrale Verwaltungsschale ermöglicht bereits ohne die Installation weiterer Applikationen wichtige grundlegende Funktionalitäten in der Smart Factory. Sie enthält dazu ein Modul zur Visualisierung sowie spezifische Module zu den verschiedenen Mehrwertfeldern und zur Durchführung von Einstellungen und der Konfiguration. Einstellungen bezieht sich dabei auf die Einstellungen für eine Anlage/Vorrichtung/Komponente mit dieser zugeordneten Verwaltungsentität, welche von den spezifischen Gegebenheiten in einer Smart Factory abhängig sind und somit nicht vom Hersteller im Vorhinein bestimmt werden können. Bei der Installation müssen die entsprechenden Einstellungen vorgenommen werden. Konfiguration hingegen bezieht sich auf die Relationen der Anlagen/Vorrichtungen/Komponenten untereinander und entspricht damit einem Beispiel der Industrieanlagenstrukturinformationen.

Die erfindungsgemäße Zentrale Verwaltungsschale bietet über die Module bereits zahlreiche grundlegende Funktionen zur Planung und Steuerung einer Smart Factory. Für komplexere Funktionalitäten (z.B. Feinplanung der Produktion) können zusätzliche Applikationen (z.B. ein MES-System (MES: Manufacturing Execution System, Produktionsleitsystem)) an die erfindungsgemäße Zentrale Verwaltungsschale bzw. die erfindungsgemäße Vorrichtung und das erfindungsgemäße Verfahren zur Ansteuerung und Verwaltung einer Industrieanlage, die Zentrale Verwaltungsschale bereitstellen, wird angedockt werden.

Beispielhafte Ausführungsbeispiele der vorliegenden Erfindung können ferner derart ausgeweitet werden, dass die Kommunikation zudem auf Menschen als Asset (Disposition von Arbeitskräften) und Werkstücke (Werkstückgesteuerte Produktion) erweitert wird.

Die vorstehend genannten Fähigkeitsverzeichnisse (Methodenlisten) gemäß beispielhaften Ausführungsbeispielen der vorliegenden Erfindung dienen dazu, die (standardisierten) Daten, welche die Anlagen/Vorrichtungen/Komponenten über die Schnittstelle (den Schnittstellenspeicher) an die Verwaltungsschale liefern, durch spezifische Methoden zu validieren und daraus Informationen, die für die Interoperabilität, den sicheren und robusten Datenaustausch und die Mehrwertfelder relevant sind, zu schaffen.

Methodenverzeichnisse (Methodenlisten, Fähigkeitsverzeichnisse) enthalten alle gemäß dem erfindungsgemäßen Konzept verwendbaren Daten, Parameter, Methoden, Formeln, Formate sowie deren Beziehungen untereinander beispielsweise auf Basis bestehender Normen, Gesetze und Vorschriften in strukturierter Form. Das Verzeichnis dient somit als Basis für die im Wissensbereich einer Smart Factory notwendigen Informationen.

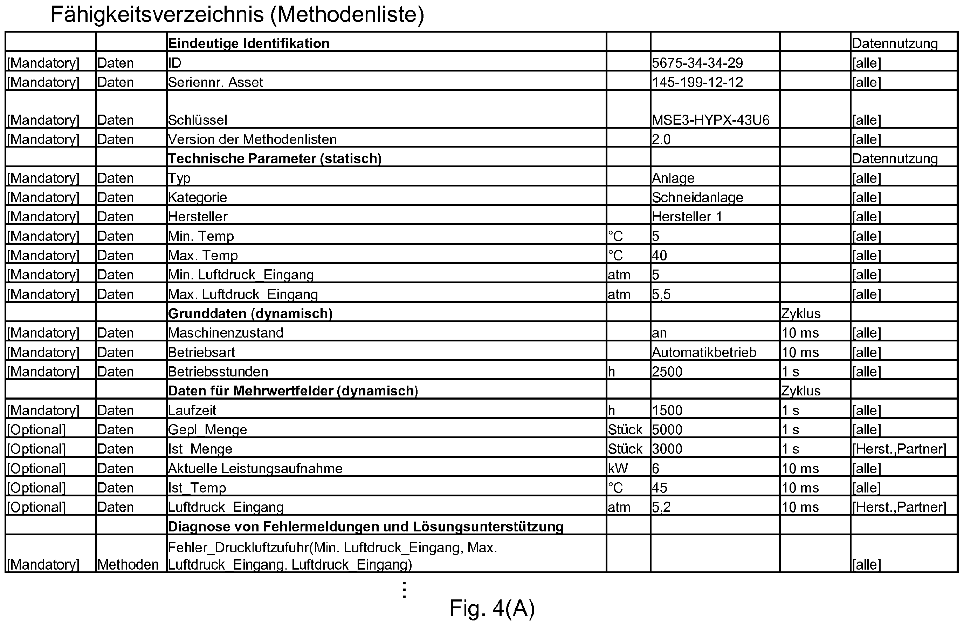

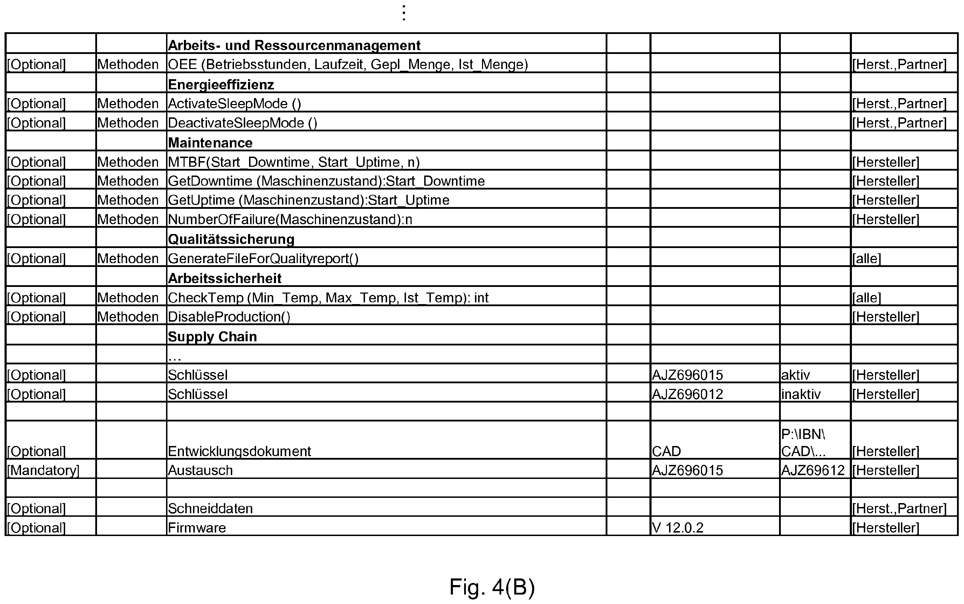

Figur 4 ist ein schematisches Diagramm, das ein Fähigkeitsverzeichnis gemäß beispielhafter Ausführungsbeispiele der vorliegenden Erfindung veranschaulicht.

Die in Figur 4 veranschaulichte Methodenliste stellt dabei lediglich ein Beispiel einer möglichen Methodenliste (Fähigkeitsverzeichnis) dar, das dem Verständnis der vorliegenden Erfindung dient. Erfindungsgemäße Fähigkeitsverzeichnisse sind weder auf die angegebenen einzelnen Felder noch auf die jeweiligen Feldinhalte beschränkt. Insbesondere kann eine tatsächliche Implementierung mehr oder weniger Felder als gezeigt sowie von den gezeigten Felder abweichende Felder aufweisen.

Gemäß Figur 4 kann die Methodenliste die Bereiche "Eindeutige Identifikation", "Technische Parameter (statisch)", "Grunddaten (dynamisch)", "Daten für Mehrwertfelder (dynamisch, mit definierter Zykluszeit)", "Methoden (Fehlermeldungen, Arbeits- und Ressourcenmanagement, Energieeffizienz, Maintenance, Qualitätssicherung, Arbeitssicherheit, Supply Chain)", "Verweis auf Subsysteme", "Lebenszyklusdaten (z.B. Entwicklungsdaten, Austausch)", und/oder "Technologie- und Servicedaten (spezifische Daten für den direkten Austausch zwischen Assets)" umfassen.

Die Technischen Parameter sind dabei ein Beispiel der Komponentenparameter.

Die Grunddaten und die Daten für Mehrwertfelder sind dabei Beispiele für die dynamischen Komponentenbetriebswerte.

Die Methoden sind dabei Beispiele für die Synthesemethoden.

Wie in Figur 4 dargestellt, umfasst der Bereich "Eindeutige Identifikation" beispielsweise die Felder ID, Seriennummer des Assets, Schlüssel, und Version der Methodenlisten/Fähigkeitsverzeichnisse.

Ferner umfasst der Bereich "Technische Parameter" beispielsweise die Felder Typ, Kategorie, Hersteller, Minimaltemperatur, Maximaltemperatur, Minimalluftdruck am Eingang, und Maximalluftdruck am Eingang.

Ferner umfasst der Bereich "Grunddaten" beispielsweise die Felder Maschinenzustand, Betriebsart, Betriebsstunden.

Ferner umfasst der Bereich "Daten für Mehrwertfelder" beispielsweise die Felder Laufzeit, Geplante Menge, ist-Menge, Aktuelle Leistungsaufnahme, Ist-Temperatur, und Luftdruck am Eingang.

Ferner umfasst der Bereich "Methoden" beispielsweise die Felder bzw. beispielhaften Synthesemethoden "Fehler_Druckluftzufuhr(Min. Luftdruck_Eingang, Max. Luftdruck_Eingang, Luftdruck_Eingang)", "OEE (Betriebsstunden, Laufzeit, Gepl_Menge, Ist_Menge)", "ActivateSleepMode ()", "DeactivateSleepMode ()", "MTBF(Start_Downtime, Start_Uptime, n)", "GetDowntime (Maschinenzustand):Start_Downtime", "GetUptime (Maschinenzustand): Start_Uptime", "NumberOfFailure(Maschinenzustand):n", "GenerateFileForQualityreport()", und "CheckTemp (Min_Temp, Max_Temp, Ist_Temp): int", "DisableProduction()", und somit Methoden zur Bestimmung von angereicherten Informationen (z.B. "Fehler_Druckluftzufuhr(Min. Luftdruck_Eingang, Max. Luftdruck_Eingang, Luftdruck_Eingang)") und auch Methoden zum Eingriff in das entsprechende Asset/Industrieanlagenkomponente (z.B. "ActivateSleepMode ()").

Die Synthesemethoden können ferner die Identifikation sowohl eines Ursprungs einer Abfrage als auch der Industrieanlagenkomponente umfassen. Ferner können die Synthesemethoden die Verifizierung von Daten, Werten, Parametern, und Informationen umfassen.

Jedem der oben genannten Felder können Informationen bezüglich einer Zugriffs- bzw. Nutzungsberechtigung zugefügt sein. Dies ermöglich eine Kontrolle darüber, wer bzw. was auf Daten zugreifen, diese empfangen, und/oder in den Betriebsablauf der Industrieanlagenkomponente eingreifen darf.

Dabei können die Berechtigungsinformationen in verschiedenen Granulierungen vorliegen, beispielsweise auf einer groben Ebene der Hersteller von Komponenten/Applikationen oder auf einer sehr feinen Ebene einzeln identifizierter Komponenten.

Weil die Methodenliste sowohl bei der erfindungsgemäßen Zentralen Verwaltungsschale, der vorstehend genannten der jeweiligen Industrieanlagenkomponente zugeordneten Verwaltungsentität, und einem dem System zugeordneten übergeordneten Server abgelegt wird, wird eine Konsistenz sichergestellt und somit die Prüfbarkeit erleichtert.

In Bezug auf die vorstehend genannten Verknüpfungen zu (externen) Applikationen und Cloud-Diensten regelt die erfindungsgemäße Zentrale Verwaltungsschale als Schnittstelle zwischen den Assets einer Smart Factory und lokalen/Cloud-Applikationen klar und strukturiert, welche Informationen mit Zustimmung des Betreibers in standardisierter Form ausgetauscht und weiterverarbeitet werden dürfen und wie Handlungsempfehlungen von den Applikationen an die Assets zurückgegeben werden dürfen.

Der standardisierte Austausch von Informationen zwischen den verschiedenen Industrieanlagenkomponenten bzw. diesen zugeordneten Verwaltungsentitäten und der erfindungsgemäßen Zentralen Verwaltungsschale stellt eine grundlegende Voraussetzung dar, um Interoperabilität und Industrie-4.0-Funktionalitäten herstellerübergreifend zu realisieren.

Der Austausch stellt dabei jedoch nur die Basis dar. Für komplexere Industrie-4.0-Funktionalitäten, z.B. ein vorausschauendes Energiemanagement oder die Integration verschiedener Faktoren zur Identifikation des optimalen Wartungszeitpunktes, müssen die unterschiedlichen Informationen weiterverarbeitet werden.

Je nach Komplexität, benötigter Rechenkapazität und weiterer Faktoren, z.B. Datensicherheit, kann dies lokal durch spezialisierte Applikationen geschehen oder es werden bestimmte Funktionalitäten als Cloud-Dienste auf externen Servern angeboten und eingebunden. Für Hersteller von Anlagen/Vorrichtungen/Komponenten ist es dabei zudem von Interesse, beispielsweise Laufzeitdaten ihrer Produkte für die Entwicklung und Optimierung künftiger Versionen zu erhalten. Da bei heutigen Cloudlösungen häufig für den Betreiber einer Smart Factory nicht genau ersichtlich ist, welche Daten mit dem externen Server ausgetauscht werden, besteht bei vielen eine Skepsis, diese zu nutzen.

Das erfindungsgemäße Konzept löst diese Herausforderungen durch das Konzept der vorstehend genannten Schnittstelle zur Verknüpfung mit Applikationen bzw. Cloud-Diensten. Dabei wird eindeutig und transparent geregelt, welche Informationen von der erfindungsgemäßen Zentralen Verwaltungsschale in strukturierter Form weitergegeben werden.

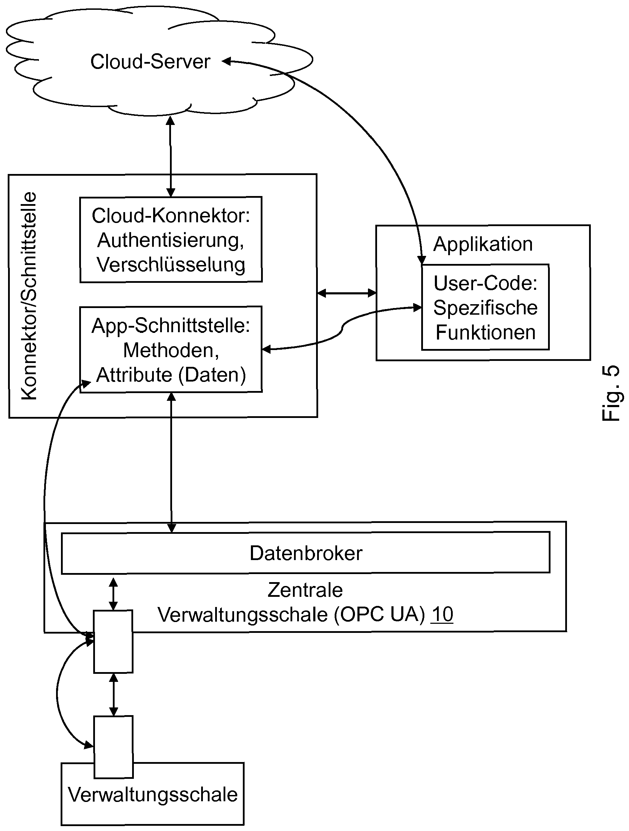

Wenn der Betreiber einer Smart Factory eine spezifische Applikation oder einen Cloud-Dienst in Anspruch nehmen will, muss er dem Datentransfer zustimmen, bevor er die entsprechenden Dienste nutzen kann. Dabei wird ihm durch die vorstehend genannte Schnittstelle zur Verknüpfung (Konnektor) transparent dargelegt, welche Informationen von der erfindungsgemäßen Zentralen Verwaltungsschale für den Austausch zur Verfügung gestellt werden sollen. Der Betreiber kann daraufhin bestimmen, ob bzw. welche Informationen durch die jeweilige Applikation genutzt werden dürfen. Figur 5 zeigt schematisch die Funktionsweise einer vorstehend genannten Schnittstelle zur Verknüpfung (Konnektor), der die Schnittstelle zwischen der erfindungsgemäßen Zentralen Verwaltungsschale, Applikationen und (optional) Cloud-Servern bildet.

Über einen entsprechenden Konnektor können die Applikationen auf Informationen und Methoden zugreifen, die von den angeschlossenen Industrieanlagenkomponenten bzw. diesen zugeordneten Verwaltungsentitäten zur Verfügung gestellt werden, und die für die Art von Applikation zugelassen sind.

Gemäß beispielhaften Ausführungsbeispielen der vorliegenden Erfindung kann in der Methodenliste (Fähigkeitsverzeichnis) festgelegt sein, welche Informationen von wem genutzt werden dürfen. Obligatorische Daten sind dabei grundsätzlich für alle Applikationen offen. Bei den optionalen Daten kann der Hersteller festlegen, ob nur Applikationen von dem jeweiligen Hersteller oder auch Applikationen zugelassener Partner oder alle Applikationen darauf zugreifen dürfen.

Gemäß beispielhaften Ausführungsbeispielen der vorliegenden Erfindung kann auch im Konnektor festgelegt sein (beispielsweise durch den Entwickler einer Applikation), welche Informationen/Methoden von welchen Arten von Industrieanlagenkomponenten zugeordneten Verwaltungsentitäten für eine spezifische Applikation benötigt werden. Beispielsweise könnte für eine Energieeffizienz-Applikation festgelegt sein, dass von allen an die erfindungsgemäße Zentrale Verwaltungsschale angeschlossenen Industrieanlagenkomponenten zugeordneten Verwaltungsentitäten den aktuellen Energieverbrauch benötigt.

Zudem besitzt gemäß beispielhaften Ausführungsbeispielen der vorliegenden Erfindung eine Applikation selbst ebenfalls bestimmte Parameter wie z.B. Anbieter der Applikation, Typ der Applikation, ID. Somit kann der Konnektor (vorstehend genannte Schnittstelle zur Verknüpfung) prüfen, ob die von der Applikation angeforderten Informationen auch für die entsprechende Applikation durch den Hersteller einer einer Industrieanlagenkomponente zugeordneten Verwaltungsentität freigegeben sind.

Nachdem überprüft und festgelegt wurde, welche Informationen/Methoden der Applikation zur Verfügung gestellt werden, kann diese die Informationen durch Applikations-spezifische Funktionen weiterverarbeiten (durch welche Funktionen die Applikation die Informationen weiterverarbeitet, wird dabei gemäß dem erfindungsgemäßen Konzept nicht eingeschränkt). Dies kann entweder lokal geschehen oder aber in Zusammenspiel mit einem Cloud-Dienst.

In diesem Fall wird ein cloud-bezogener Konnektor (vorstehend genannte Schnittstelle zur Verknüpfung) von der Applikation genutzt, um eine sichere Verbindung zu einem Cloud-Server (z.B. des Applikations-Anbieters) herzustellen und eine entsprechende Authentifizierung der Applikation durchzuführen.

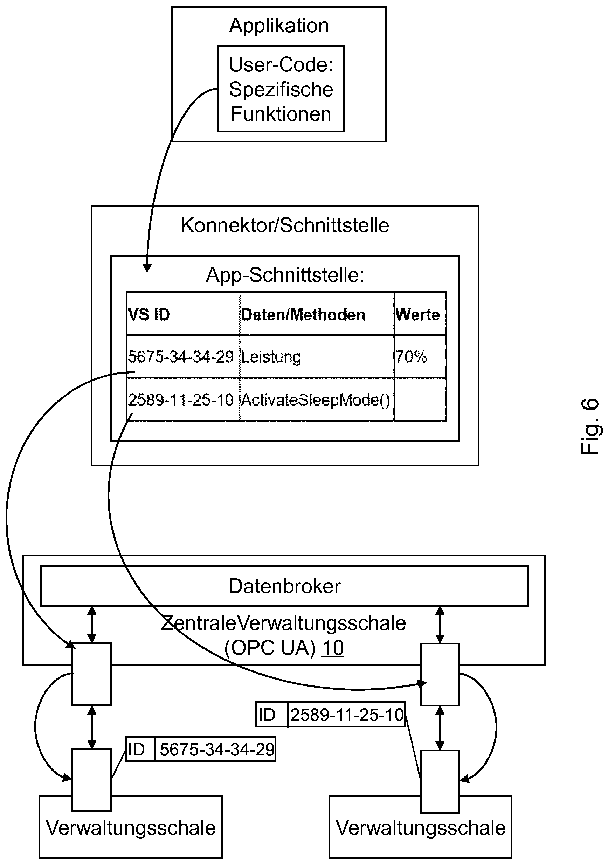

Wie in Figur 6 dargestellt, kann der cloud-bezogene Konnektor und der applikations-bezogene Konnektor durch einen gemeinsamen Konnektor (vorstehend genannte Schnittstelle zur Verknüpfung) umfasst sein.

Gemäß dem erfindungsgemäßen Konzept wird dabei nicht eingeschränkt, welche Funktionen durch die Applikation lokal und welche in der Cloud ausgeführt werden. Dies kann z.B. der Fall sein, um komplexere Berechnungen auf leistungsstarken Cloud-Servern durchzuführen oder den Hersteller in bestimmten Situationen (z.B. anstehende Wartung) zu informieren.

Neben der Nutzung der zugelassenen Informationen/Methoden durch die Applikation kann diese wiederum Informationen an die erfindungsgemäße Zentrale Verwaltungsschale zurückliefern, welche Aktionen durch die jeweiligen Industrieanlagenkomponenten zugeordneten Verwaltungsentitäten ausgeführt werden sollen. Beispielsweise kann eine Energiemanagement-Applikation eine Empfehlung bzw. eine konkrete Anweisung zum Herunterfahren einer Anlage geben, um so eine kostspielige Energiespitze zu vermeiden. Während der applikations-spezifische Code Informationen in beliebiger Form weiterverarbeiten kann, müssen die Informationen/Methoden die an die erfindungsgemäße Zentrale Verwaltungsschale (und/oder Industrieanlagenkomponenten zugeordneten Verwaltungsentitäten) zurückgeliefert werden, wiederum dem in den entsprechenden Methodenlisten (Fähigkeitsverzeichnissen) festgelegten Standard entsprechen und daher über den Konnektor übergeben werden.

Zusätzlich muss bei der Übergabe definiert werden, für welche einer Industrieanlagenkomponente zugeordneten Verwaltungsentität (ID) die Informationen/Methoden übergeben werden sollen.

Figur 6 veranschaulicht schematisch das vorstehend beschriebene Verfahren.

Gemäß der in Figur 6 veranschaulichten beispielhaften Umgebung sollen beispielhaft zwei Industrieanlagenkomponenten zugeordnete Verwaltungsentitäten (mit der ID 5675-34-34-29 bzw. 2589-11-25-10) angesprochen werden. In der einen Verwaltungsentität bzw. der zugeordneten Industrieanlagenkomponente soll die Leistung auf 70% reduziert werden, und in der anderen Verwaltungsentität bzw. der zugeordneten Industrieanlagenkomponente soll die Methode ActivateSleepMode() aufgerufen werden.

Durch die eindeutige ID der Industrieanlagenkomponenten zugeordneten Verwaltungsentitäten kann die entsprechende Information an die korrekte Verwaltungsentität übermittelt werden und nachfolgend an die Steuerung des Assets bzw. der jeweiligen Industrieanlagenkomponente.

Wenn mehrere Applikationen (und damit mehrere vorgenannte Konnektoren) dieselben Informationen nutzen sollen und dadurch ggf. auch verschiedene (sich möglicherweise widersprechende) durchzuführende Aktionen an die erfindungsgemäße Zentrale Verwaltungsschale zurückliefern, kann erfindungsgemäß eine Priorität des jeweiligen Konnektors festgelegt werden.

Bevorzugt muss der Betreiber der Smart Factory bei der Installation die Priorität des jeweiligen Konnektors festlegen.

Der erfindungsgemäße Konnektor (vorstehend genannte Schnittstelle zur Verknüpfung) sorgt somit für einen geregelten und für den Betreiber einer Smart Factory transparenten Austausch von strukturierten Informationen mit Applikationen und Cloud-Servern von Drittanbietern. Der Betreiber einer Smart Factory kann erfindungsgemäß zu jeder Zeit durch Deinstallation der Applikation - und somit des Konnektors - unter Verzicht auf die entsprechende Applikation den Datenaustausch unterbinden.

Bei den vorstehend genannten Applikationen kann es sich erfindungsgemäß beispielsweise um Industrieapplikationen, Dienstleistungsapplikation, oder Konnektorapplikationen handeln.

Industrieapplikationen können Funktionalitäten für Anlagen/Vorrichtungen/Komponenten aufweisen. Der Hersteller eines Assets kann eine entsprechende Applikation für seine Kunden anbieten. Damit die Applikation genutzt werden kann, ist (mindestens) ein Asset mit einer entsprechenden Verwaltungsentität des entsprechenden Herstellers notwendig.

Dienstleistungsapplikation benötigen hingegen grundsätzlich lediglich die erfindungsgemäße Zentrale Verwaltungsschale. Beispiele für solche Dienstleitungsapplikationen sind Wetterapplikationen und Buchhaltungsapplikationen. Für erweiterte Funktionalitäten solcher Dienstleistungsapplikationen werden gegebenenfalls bestimmte Industrieanlagenkomponenten zugeordnete Verwaltungsentitäten benötigt.

Konnektorapplikationen dienen vornehmlich als Portal zur Übertragung von Daten an eine (Hersteller-)Cloud. Diese kann der Hersteller beispielsweise zur Analyse seiner Produkte nutzen und daraufhin Verbesserungen bei der Entwicklung neuer Produkte vornehmen.

Nachstehend sollen einige Beispiele konkreter Umsetzungen bzw. Fähigkeiten beim Einsatz der erfindungsgemäßen Zentralen Verwaltungsschale in dem erfindungsgemäßen Konzept in Industrie-4.0-Umgebungen gegeben werden.

Die Umsetzung der erfindungsgemäßen Zentralen Verwaltungsschale kann beispielsweise eine Unterstützung bei der Analyse von Fehlermeldungen ermöglichen.

Bei aktuellen Anlagen/Vorrichtungen/Komponenten werden einem Bediener üblicherweise Fehlermeldungen (oder Fehlercodes) angezeigt (z.B. auf dem Bedienpanel). Mögliche Ursachen und Vorgehen zur Fehlerbehebung werden dabei jedoch häufig in der Bedienungs- oder Wartungsanleitung beschrieben, und der Bediener muss anhand dieser versuchen, den Fehler eigenständig zu beheben. Durch die in der Methodenliste definierten Methoden wird dem Bediener gemäß dem erfindungsgemäßen Konzept eine Unterstützung bei der Beseitigung des Fehlers geboten, indem automatisch Daten und Parameter, die als Ursache für einen spezifischen Fehler in Frage kommen können, überprüft werden. Der Bediener erhält daraufhin eine entsprechende Rückmeldung, oder der Fehler kann ggf. direkt durch das System selbst behoben werden. Beispielsweise könnte bei der Fehlermeldung "Fehler bei der Druckluftzufuhr!" ein zu niedriger Luftdruck am Eingang der Anlage die mögliche Ursache sein. Eine entsprechende Methode kann die hinterlegten Parameter und die vorliegenden Ist-Daten zum Luftdruck überprüfen. Liegt der aktuelle Luftdruck am Eingang jedoch im erlaubten Bereich, kann die entsprechende Methode zur Fehlerbehebung diese Ursache bereits ausschließen und den Bediener entsprechend darauf hinweisen. Dieser erreicht dadurch eine erhebliche Zeiteinsparung und kann die Fehlersuche weiter eingrenzen.

Die Umsetzung der erfindungsgemäßen Zentralen Verwaltungsschale kann ferner beispielsweise eine Asset-zu-Asset-Kommunikation (Industrieanlagenkomponente-zu-Industrieanlagenkomponente-Kommunikation) ermöglichen.

Bei dem erfindungsgemäßen Konzept werden in der Methodenliste relevante obligatorische und freiwillige Daten definiert, die für die Funktionalitäten in den verschiedenen Mehrwertfeldern von den verschiedenen Systemen in standardisierter Form zur Verfügung gestellt werden müssen. Um potentielle zukünftige Industrie-4.0-Szenarien, in denen verschiedene Assets direkt miteinander kommunizieren und Daten/Informationen austauschen, nicht einzuschränken, ist die Methodenliste erweiterbar gestaltet und ermöglicht im Methodenlistenbereich "Technologie- und Servicedaten" den Austausch von spezifischen Daten zwischen Assets (z.B. Schneiddaten). Eine Überprüfung eines Assets durch die erfindungsgemäße Zentrale Verwaltungsschale bei der Installation stellt sicher, dass die angeschlossenen Systeme insbesondere die Anforderungen an die Interoperabilität erfüllen, eine eindeutige Identifizierung gewährleistet wird und öffnet, wenn von den Herstellern der Assets entsprechend vorgesehen, die Möglichkeit zum direkten Austausch (beispielsweise physisch über die erfindungsgemäße Zentrale Verwaltungsschale).

Die Umsetzung der erfindungsgemäßen Zentralen Verwaltungsschale kann außerdem beispielsweise einen Austausch von Subsystemen erleichtern.

Wenn ein neu angeschlossenes Subsystem insbesondere die Anforderungen an die Interoperabilität erfüllt und gemäß dem erfindungsgemäßen Konzept einbindbar ist, wird dieses von einer Verwaltungsentität der Anlage erkannt (Plug-and-Play) und ein Verweis auf das neue Subsystem im entsprechenden Datenbereich angelegt und auf den Wert Aktiv gesetzt. Erfindungsgemäß erfolgt eine Überprüfung des Schlüssels der hinzugefügten Komponente mittels des übergeordneten, dem System zugeordneten Servers, bevor die entsprechenden Funktionalitäten dieser Komponente genutzt werden können. Nach dem Austausch kann beispielsweise ein zertifizierter Techniker bestätigen, dass die Inbetriebnahme durchgeführt wurde. Beispielsweise erhält, wird die Inbetriebnahme nicht bestätigt, der Betreiber der Smart Factory einen entsprechenden Hinweis, der zu bestätigen ist. Hat der Betreiber einer Datenübertragung an den Hersteller des Subsystems zugestimmt, erhält dieser eine Log-Datei mit den entsprechenden Informationen über sein Subsystem, um z.B. häufiger auftretende Fehlerursachen zu analysieren. Erkennt der Hersteller z.B. einen Fehler in seinem Produkt, kann der Hersteller dem Betreiber einer Smart Factory über eine entsprechende Meldung den Hinweis auf einen nötigen Austausch oder die Empfehlung zu einem Software-Update geben.

Die vorstehend beschriebenen Verfahren und Funktionalitäten können durch jeweilige funktionale Elemente, Prozessoren, oder dergleichen umgesetzt werden, wie nachstehend beschrieben wird.

Vorstehend wurden bei der beispielhaften Beschreibung der Vorrichtungen lediglich die Elemente beschrieben, die für das Verständnis der Prinzipien der Erfindung relevant sind. Die Vorrichtungen können jedoch noch weitere Elemente aufweisen, die für deren jeweiligen Betrieb notwendig sind. Eine Beschreibung solcher Elemente wurde in dieser Beschreibung für ein erleichtertes Verständnis weggelassen. Die Anordnung der funktionalen Blöcke in den Figuren soll die Erfindung nicht beschränken, und die entsprechenden Funktionen können durch einen Block umgesetzt werden oder auf weitere Unterblöcke aufgeteilt sein.

Wenn vorstehend definiert ist, dass eine Vorrichtung (oder eine andere Einrichtung) dazu eingerichtet ist, um eine Funktion auszuführen, dann ist dies als äquivalent zu einer Beschreibung auszulegen, dergemäß (zumindest) ein Prozessor oder eine entsprechende Schaltung, potentiell in Kooperation mit in einem Speicher der jeweiligen Vorrichtung gespeichertem Computerprogramm-Code, dazu eingerichtet ist, um die Vorrichtung dazu zu bringen, zumindest die Funktion durchzuführen bzw. darzustellen.

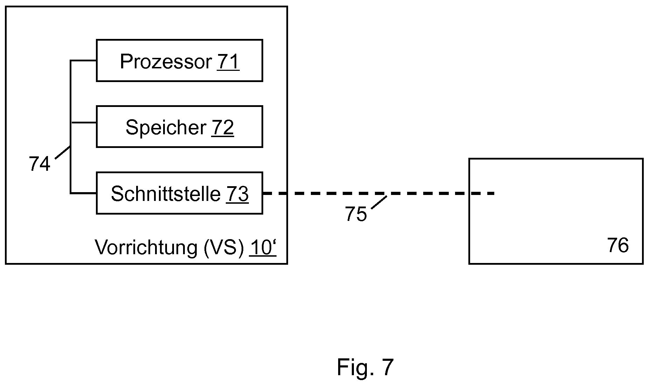

In Figur 7 ist eine alternative Veranschaulichung einer Vorrichtung gemäß beispielhaften Ausführungsbeispielen der vorliegenden Erfindung. Wie in Figur 7 gezeigt, umfasst die Vorrichtung 10' (entsprechend der Vorrichtung 10) (mindestens) einen Prozessor 71, (mindestens) einen Speicher 72, und (mindestens) eine Schnittstelle 73, die mittels eines Busses 74 oder dergleichen miteinander verbunden sind. Die Vorrichtung 10' kann mittels Verbindung 75 mit anderen Vorrichtungen oder Einrichtungen 76 verbunden sein. Dabei können die Verbindungen zu anderen Vorrichtungen mittels einer (derselben) Schnittstelle (wie in Figur 7 veranschaulicht) oder abweichend davon mittels unterschiedlichen, jeweilig zugeordneten Schnittstellen bereitgestellt werden.

Gemäß beispielhaften Ausführungsbeispielen der vorliegenden Erfindung umfasst eine Vorrichtung zur Ansteuerung und Verwaltung einer Industrieanlage also zumindest einen Prozessor 71, zumindest einen Speicher 72 einschließlich einem Computerprogramm-Code, und zumindest eine Schnittstelle 73, die zur Kommunikation mit zumindest einer anderen Vorrichtung eingerichtet ist. Der zumindest eine Prozessor mit dem zumindest einen Speicher und dem Computerprogramm-Code ist dazu eingerichtet, um ein Speichern (daher umfasst die Vorrichtung eine entsprechende Einrichtung zum Speichern) von Industrieanlagenstrukturinformationen bezüglich einer Anordnung der Vielzahl von Industrieanlagenkomponenten (jeder der Vielzahl von Industrieanlagenkomponenten ist ein Fähigkeitsverzeichnis zugeordnet, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst), ein Speichern des Fähigkeitsverzeichnisses entsprechend jeder der Vielzahl von Industrieanlagenkomponenten, ein Empfangen (daher umfasst die Vorrichtung eine entsprechende Einrichtung zum Empfangen) von Daten bezüglich jeder der Vielzahl von Industrieanlagenkomponenten, ein Speichern von empfangenen Daten, und ein Zusammenführen (daher umfasst die Vorrichtung eine entsprechende Einrichtung zum Zusammenführen) der empfangenen Daten basierend auf den Industrieanlagenstrukturinformationen durchzuführen.

Für weitere Details bezüglich des Betriebs bzw. Funktionalitäten der einzelnen Vorrichtungen wird auf die vorstehende Beschreibung in Kombination mit Figuren 1 bis 6 verwiesen.

In Hinblick auf das Obige sind Maßnahmen bzw. Mittel zur Realisierung einer Ansteuerung und Verwaltung einer Industrieanlage bereitgestellt. Solche Maßnahmen bzw. Mittel umfassen beispielhaft ein Speichern von Industrieanlagenstrukturinformationen bezüglich einer Anordnung der Vielzahl von Industrieanlagenkomponenten, wobei jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, ein Speichern des Fähigkeitsverzeichnisses entsprechend jeder der Vielzahl von Industrieanlagenkomponenten, ein Empfangen von Daten bezüglich jeder der Vielzahl von Industrieanlagenkomponenten, ein Speichern von empfangenen Daten, und ein Zusammenführen der empfangenen Daten basierend auf den Industrieanlagenstrukturinformationen.

## Patentansprüche

1. Verfahren zur Ansteuerung und Verwaltung einer Industrieanlage mit einer Vielzahl von Industrieanlagenkomponenten, mit
einem Speichern von Industrieanlagenstrukturinformationen bezüglich einer Anordnung der Vielzahl von Industrieanlagenkomponenten, wobei
jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und wobei das Verfahren ferner umfasst
ein Speichern des Fähigkeitsverzeichnisses entsprechend jeder der Vielzahl von Industrieanlagenkomponenten,
ein Empfangen von Daten bezüglich jeder der Vielzahl von Industrieanlagenkomponenten,
ein Speichern von empfangenen Daten, und
ein Zusammenführen der empfangenen Daten basierend auf den Industrieanlagenstrukturinformationen.

2. Verfahren nach Anspruch 1, wobei das Fähigkeitsverzeichnis umfasst
zumindest einen hinterlegten statischen Komponentenparameter der jeweiligen Industrieanlagenkomponente, der für eine Eigenschaft der jeweiligen Industrieanlagenkomponente steht, und/oder
eine Komponentenbetriebswertspezifizierung zumindest eines durch die Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder
zumindest eine Synthesemethode zur auf zumindest einem durch das Fähigkeitsverzeichnis spezifizierten dynamischen Komponentenbetriebswert basierenden Generierung von Informationen für eine Ansteuerung und/oder Verwaltung der jeweiligen Industrieanlagenkomponente, und/oder
zumindest eine Eingriffsmethode zum Eingriff in einen Betrieb der Industrieanlagenkomponente, und/oder
Empfängerberechtigungsinformation bezüglich zumindest einem dynamischen Komponentenbetriebswert, zumindest einer Synthesemethode, zumindest einer generierten Information, und/oder zumindest einer Eingriffsmethode, und wobei
die empfangenen Daten eines aus durch die Industrieanlagenkomponente zu erfassenden dynamischen Komponentenbetriebswerten und durch eine Synthesemethode generierten Informationen sind.

3. Verfahren nach Anspruch 2, ferner mit
einem Empfangen eines Abrufs eines dynamischen Komponentenbetriebswerts, eines Abrufs einer durch eine Synthesemethode zu generierenden Information, und/oder eines Abrufs einer Eingriffsmethode bezüglich einer Abfrageindustrieanlagenkomponente, wobei der Abruf das Identifizierungszeichen der Abfrageindustrieanlagenkomponente umfasst, und
einem Bestimmen, basierend auf dem Identifizierungszeichen der Abfrageindustrieanlagenkomponente und dem Fähigkeitsverzeichnis der Abfrageindustrieanlagenkomponente, ob der Abruf für die Abfrageindustrieanlagenkomponente erlaubt ist.

4. Verfahren nach Anspruch 3, ferner mit
einem Prüfen, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, ob der dynamische Komponentenbetriebswert als Daten bezüglich der Abfrageindustrieanlagenkomponente empfangen und gespeichert ist,
einem Senden, wenn der dynamische Komponentenbetriebswert als Daten bezüglich der Abfrageindustrieanlagenkomponente empfangen und gespeichert ist, des dynamischen Komponentenbetriebswerts an die Quelle des Abrufs,
einem Prüfen, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, ob die durch die Synthesemethode zu generierenden Information als Daten bezüglich der Abfrageindustrieanlagenkomponente empfangen und gespeichert ist, und
einem Senden, wenn die durch die Synthesemethode zu generierenden Information als Daten bezüglich der Abfrageindustrieanlagenkomponente empfangen und gespeichert ist, der durch die Synthesemethode zu generierenden Information an die Quelle des Abrufs.

5. Verfahren nach Anspruch 4, wobei
die Komponentenbetriebswertspezifizierung ferner einen Aktualisierungszyklus des dynamischen Komponentenbetriebswerts umfasst, und das Verfahren ferner umfasst
ein Prüfen, basierend auf dem Aktualisierungszyklus, ob der als Daten bezüglich der Abfrageindustrieanlagenkomponente empfangene und gespeicherte dynamische Komponentenbetriebswert gültig ist, wobei
der dynamische Komponentenbetriebswert nur dann an die Quelle des Abrufs gesendet wird, wenn der als Daten bezüglich der Abfrageindustrieanlagenkomponente empfangene dynamische Komponentenbetriebswert gültig ist.

6. Verfahren nach einem der Ansprüche 3 bis 5, ferner mit
einem Weiterleiten, wenn bei Abruf eines dynamischen Komponentenbetriebswerts bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, des Abrufs an die Abfrageindustrieanlagenkomponente,
einem Empfangen einer Antwort der Abfrageindustrieanlagenkomponente, und
einem Weiterleiten der Antwort der Abfrageindustrieanlagenkomponente an die Quelle des Abrufs.

7. Verfahren nach einem der Ansprüche 3 bis 6, ferner mit
einem Weiterleiten, wenn bei Abruf einer durch eine Synthesemethode zu generierenden Information bestimmt ist, dass der Abruf für die Abfrageindustrieanlagenkomponente erlaubt ist und wenn die Empfängerberechtigungsinformation bezüglich des dynamischen Komponentenbetriebswerts darauf hinweist, dass eine Quelle des Abrufs dazu berechtigt ist, des Abrufs an die Abfrageindustrieanlagenkomponente,
einem Empfangen einer Antwort der Abfrageindustrieanlagenkomponente, und
einem Weiterleiten der Antwort der Abfrageindustrieanlagenkomponente an die Quelle des Abrufs.

8. Verfahren nach einem der Ansprüche 3 bis 7, ferner mit
einem Weiterleiten, wenn bei Abruf einer Eingriffsmethode bestimmt ist, dass der Abruf für die Abfrageindustrieanlagenkomponente erlaubt ist und wenn die Empfängerberechtigungsinformation bezüglich der Eingriffsmethode darauf hinweist, dass eine Quelle des Abrufs dazu berechtigt ist, des Abrufs an die Abfrageindustrieanlagenkomponente.

9. Verfahren nach einem der Ansprüche 2 bis 8, ferner mit
einem Empfang, mittels einer Eingabeeinrichtung, einer Datenweitergabezustimmungseingabe für ein bestimmtes Industrieanlagenelement bezüglich zumindest einem dynamischen Komponentenbetriebswert und/oder zumindest eine durch eine Synthesemethode zu generierende Information,
einem Speichern der Datenweitergabezustimmungseingabe, und einem Berücksichtigen der Datenweitergabezustimmungseingabe als Empfängerberechtigungsinformation.

10. Verfahren nach einem der Ansprüche 1 bis 9, ferner mit
einem Anfordern einer vorbestimmten Antwort von der Vielzahl von Industrieanlagenkomponenten, und
einem Feststellen, bei Ausbleiben einer angeforderten Antwort einer der Vielzahl von Industrieanlagenkomponenten, einer Anomalie der jeweiligen Industrieanlagenkomponente.

11. Verfahren nach einem der Ansprüche 2 bis 10, ferner mit
einem Anfordern, in vorbestimmten Abständen, von der Vielzahl von Industrieanlagenkomponenten, aller durch die jeweilige Industrieanlagenkomponente zu erfassenden dynamischen Komponentenbetriebswerte, und
einem Feststellen, bei Ausbleiben eines angeforderten zu erfassenden dynamischen Komponentenbetriebswerts einer der Vielzahl von Industrieanlagenkomponenten, einer Anomalie der jeweiligen Industrieanlagenkomponente.

12. Verfahren nach einem der Ansprüche 1 bis 11, ferner mit
einem Erkennen eines Hinzufügens einer Industrieanlagenkomponente zu der Industrieanlage und des Identifizierungszeichens der hinzugefügten Industrieanlagenkomponente,
einem Anfordern, basierend auf dem Identifizierungszeichen der hinzugefügten Industrieanlagenkomponente, eines Schlüssels bezüglich der hinzugefügten Industrieanlagenkomponente bei einem Server, und
einem Empfangen des Schlüssels bezüglich der hinzugefügten Industrieanlagenkomponente, wobei der Schlüssel umfasst
das Fähigkeitsverzeichnis bezüglich der hinzugefügten Industrieanlagenkomponente, und
das Identifizierungszeichen der hinzugefügten Industrieanlagenkomponente.

13. Verfahren nach einem der Ansprüche 4 bis 12, ferner mit
einem Kommunizieren mittels eines Open-Platform-Communications-Unified-Architecture-Protokolls.

14. Verfahren nach einem der Ansprüche 1 bis 13, wobei
die Industrieanlagenstrukturinformationen ferner auf funktionelle Abhängigkeiten zwischen der Vielzahl von Industrieanlagenkomponenten hinweisen.

15. Vorrichtung zur Ansteuerung und Verwaltung einer Industrieanlage mit einer Vielzahl von Industrieanlagenkomponenten, mit
einer Steuereinrichtung, und
einem Speicher, der dazu eingerichtet ist, um Industrieanlagenstrukturinformationen bezüglich einer Anordnung der Vielzahl von Industrieanlagenkomponenten zu speichern, wobei
jeder der Vielzahl von Industrieanlagenkomponenten ein Fähigkeitsverzeichnis zugeordnet ist, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und
der Speicher ferner dazu eingerichtet ist, um das Fähigkeitsverzeichnis entsprechend jeder der Vielzahl von Industrieanlagenkomponenten zu speichern, und wobei die Vorrichtung ferner umfasst
eine Empfangseinrichtung, die dazu eingerichtet ist, um Daten bezüglich jeder der Vielzahl von Industrieanlagenkomponenten zu empfangen, wobei
der Speicher ferner dazu eingerichtet ist, um empfangene Daten zu speichern, und
die Steuereinrichtung dazu eingerichtet ist, um die empfangenen Daten basierend auf den Industrieanlagenstrukturinformationen zusammenzuführen.

16. Computerprogrammprodukt mit einem computerausführbaren Computerprogramm-Code, der, wenn das Programm auf einem Computer ausgeführt wird, dazu eingerichtet ist, um den Computer dazu zu bringen, das Verfahren nach einem der Ansprüche 1 bis 14 auszuführen, wobei optional
das Computerprogrammprodukt ein computerlesbares Medium umfasst, auf dem der computerausführbare Computerprogramm-Code gespeichert ist, und/oder wobei das Programm direkt in einen internen Speicher des Computers oder einen Prozessor des Computers ladbar ist.
